# EUROPEAN PATENT SPECIFICATION

(11) **EP 2 239 952 B1**
(45) Date of publication and mention of the grant of the patent: **02.08.2017**
(21) Application number: 09157385.7
(22) Date of filing: 06.04.2009
(51) Int. Cl.: H04N 17/00, H04N 17/04

(54) **A method and apparatus for testing a digital video broadcast display product and a method of data communication**
Verfahren und Vorrichtung zum Testen eines digitalen Videorundfunkanzeigeprodukts und Verfahren zur Datenkommunikation
Procédé et appareil pour tester un produit d'affichage de diffusion vidéo numérique et un procédé de communication de données

(43) Date of publication of application: 13.10.2010
(73) Proprietor: Vestel Elektronik Sanayi ve Ticaret A.S., 45030 Manisa (TR); Cabot Communications Ltd, Bristol BS16 3RY (GB)
(72) Inventor: Ozturk, Ilkur, 45030, Manisa (TR); Onder, Devrim, 45030, Manisa (TR); Poole, Philip, Bristol, Avon BS16 3RY (GB); Brown, James R., Bristol, Avon BS16 3RY (GB); Wyatt, Martyn, BS16 3RY, Bristol (TR)
(74) Representative: Beck Greener

(56) References cited:
- EP-A1- 0 888 019
- EP-A2- 0 789 497

## Description

The present invention relates to a method and apparatus for testing a digital video broadcast (DVB) display product and a method of data communication.

During manufacture of DVB display products such as digital television receivers, Set Top Boxes (STBs) and other systems capable of receiving digital video broadcasts, numerous tests are performed to ensure correct operation and that standards are complied with. The term "DVB display product" is used generally to define means capable of receiving and processing a DVB signal. In use, such a DVB display product would typically be connected up to a television display or some other form of monitor so that the video can actually be watched by a user. A method and apparatus for testing DVB display products, e.g. during manufacture, is required. In addition to testing, in normal use of a DVB display product, a method of data communication is required by which data can automatically be communicated via a digital video signal.

One method by which tests of DVB display products can be achieved is by embedding digital information in to frames of a DVB signal. Specific characters or symbols may be inserted into frames. The signal is then sent to the receiver under test and during playback by the receiver, still images can be captured from the display. The data displayed can then be recognised and interpreted.

If time-invariant data is to be inserted on the video, text data or symbols from a symbol set are inserted on each image frame on the video signal and are then checked during playback. If a time-variant signal is to be used, data relating to things such as the specific frame on which it is inserted or the time that the frame will be transmitted can be inserted.

DVB display products are frequently tested against timer program functionalities, i.e. to ensure that at a specific time, a correct video frame is being displayed to a user. DVB display products are also tested against service switching scenarios in which the correct channel or DVB service should be displayed to a user in accordance with channel selection.

One way in which such tests are preformed during manufacture is with the use of Optical Character Recognition (OCR) or video image processing technology. Before each test, target text is inserted onto frames of a video as constant time-invariant data. Then during the test, the image displayed is captured in a test phase. The captured image is processed using an OCR method and the text content is automatically read. The target (captured) value is compared with a template or expected value. If they are the same or there is the expected correlation then the test is passed. Otherwise, the test has been failed and the device may be identified as faulty.

Two problems with the use of OCR in DVB display product testing complexity and precision. The OCR methods necessarily require the use and development of complex image recognition algorithms and are thus prone to generating erroneous results. In addition, automated OCR and other pattern recognition methods are complex, sensitive to content and typically require significant user editing prior to performing tests. Thus, the disadvantages can be listed as complexity, rigidness, i.e. a lack of flexibility, the need for user input and editing and algorithm dependency, in that test results may change from one OCR algorithm to another.

One way in which DVB display product testing is done, in part to address the problems identified above, is with the use of manual testers. In such testing, a human tester watches the test images or video and compares it against some benchmark, e.g. the original stream content. A tester can manually determine whether or not the system has passed by visual comparison or by using a manual timing procedure.

The main problems with manual testing are a lack of precision and time consumption. Since there are lots of test steps to be applied, it can take a large amount of time to verify each commercial product. In addition, testing is typically part of a corrective process in that a company will perform continuous testing during development. For each new software release or product modification, the test suite should be applied in its entirety to see if any change in one part of the operating software has created unexpected or unwanted changes in performance in other seemingly unrelated areas. Thus, if a manual tester is to be used, the resource required is significant.

Additional problems with manual testing are that a significant amount of manpower and effort is required, a lot of tester intervention is required, the tests are subject to high error rates due to tester fatigue and basic human error. In addition, there is a degree of subjectivity due to individual testers who may determine the same set of factors to give a different test result. There is a difficulty of testing at all or any times. For example it is difficult to perform scheduled tests during the night. It is also difficult to repeat tests in parallel with product development.

Clearly in the case of large-scale manufacture where thousands or indeed many tens of thousands of DVB display products are manufactured on a production line, a method by which the testing can be performed quickly and accurately is desirable.

Automated test systems are known and are used in "black-box" DVB display product testing. In these automated tests, different video and image processing techniques are used to understand time invariant and time-variant information in the video. An example of time-invariant information is the DVB Service ID, whereas an example of time-variant information is video frame number.

WO-A-2007/017767 discloses a system and apparatus that transmits supplementary communications combined with standard television or other visual media (e.g., cable, satellite, video, pre-recorded video, IPTV, Internet, print media) to a viewer/reader. The system of WO-A-2007/017767 in particular permits a standard television system or other visual media system to transmit supplementary data to the viewers along with the normal visual image to provide interactivity.

Japanese patent publication number JP-A-2006-041665 discloses a binary information transmission system capable of conducting the transmission of binary data during video transmission without the need for using a particular data transfer band in digital broadcast.

According to JP-A-2006-041655, binary data is superimposed on a particular position of a digital video image which is incorporated into a video stream for transmission. On the receiver side, the binary data is extracted from an image extracted from the digital stream. Subsequently, a control section processes the extracted binary information.

EP-A-0,888,019 discloses a method and apparatus for measuring the quality of a video transmission. The letter requires the insertion into an image of a barcode to enable identification of each frame.

EP-A-0,789,497 discloses a method of automatic measurement of compressed video quality. The method requires the superimposition of special markings in an active video region of a subset of contiguous frames within a test video sequence.

According to a first aspect of the present invention, there is provided a method of automatically testing Digital Video Broadcast receivers, the method comprising:
generating a test signal comprising plural image frames; on one or more frames providing a 2-dimensional binary encoded signal indicative of a parameter of the respective frame; transmitting the signal to a receiver; and automatically reading the binary encoded signal from the receiver and determining therefrom a parameter of the respective frame in which the binary encoded signal is repeated at plural positions on its respective frame.

This means that detection is made more simple and methods such as structural matching, image analysis or pattern recognition may easily be performed to identify the location of the binary data.

WO-A-2007/017767 requires that supplementary information is converted into binary-coded data by constructing an optically readable image of at least two data cells, and further WO 2007/017767 includes an apparatus comprising an optical reader for capturing said optically readable image, and a decoder for decoding the optically readable image as well. In contrast to this,

The present invention, on the other hand, makes use of a binary data sequence, whose length could be adapted with respect to the data to be used. Also, the present method includes CRC (cyclic redundancy check) structure which provides "error detection" measures. Thus, it could be ascertained whether the transmitted data is erroneous or not, and enables opportunity to repeat until the error-free data is received or simply report failure of the equipment.

The present invention also does not require a separate apparatus comprising an optical reader and a decoder for capturing and decoding said optically readable image, but rather makes use of "frame capturing" to collect the information communicated via still images using 2-dimensional binary-coding. Furthermore, the receiver of the present invention detects the binary data by means of image processing. WO 2007/017767 basically performs on the external usability of said optical reader. This necessitates that only the display with said separate apparatus could extract the information at a specific moment.

However, according to the present invention, it is sufficient that the frame is simply recorded at the receiver side time independently. It is possible to extract the communicated information from that frame at any time desirable in the future.

The method according to WO-A-2007/017767 could accommodate the supplementary digital data by making use of a video mixer, whereas, in embodiments, the present invention provides inserting of data onto the frames of a recorded video, and then regenerating a new version of the stream by combining an edited set of frames for testing of a DVB system.

The present method is used for testing purposes. However, the method may have several other fields of use, such as applications for the control of digital stream databases in digital broadcasting, transmission of information via various images, performance measurement, archiving, analysing etc. Moreover, the information to be transmitted could be different from the "Service ID" and "frame number" depending on the application.

In a DVB product, if the Timer is working properly, at a specific time one should be at a specific instant of a Service. Thus, with this knowledge, it is possible that the DVB product can be controlled such that when a desired Timer time arrives, the apparatus automatically switches to the correct Service. Furthermore, if one has a product with recording capability, the correct programme will be recorded only if the expected timing of the video corresponds with the actual arrival of the relevant stream. In the manual tests, this has to be checked by the user. In the proposed method, it is possible automatically to detect whether the correct Service is displayed.

Moreover, in embodiments, the invention enables timing control. For the sake of example consider a situation in which a 1 minute Timer has been set. At the moment that the Timer has started, a display of the 1000th frame is received. At the end of the set Timer period if the rate of change of frames is known, e.g. 1 Frame/second, if a display of the 1060th (1000+60=1060) frame is received, then it can be determined that the apparatus is working properly. Thus, simple and robust automatic testing is enabled by the use of the method and apparatus disclosed herein.

In an embodiment, in order to achieve the transmission of data, frames within the video stream are captured by means of "tools", and information is superimposed onto each frame utilising another tool. In the next step, as the newly obtained frames are combined, a data bearing version of the original DVB stream is acquired.

Preferably, the present method identifies all bits of the 2-dimensional data sequence by means of specific image processing techniques. More preferably, some sort of structural matching, image analysis or pattern recognition is performed for this purpose.

In one embodiment, the parameter of the frame is a time invariant parameter. In another embodiment, the parameter is time variant, e.g. the frame number.

In one preferred embodiment, the step of automatically reading the binary encoded signal comprises identifying the position of the start of the signal and from the identified start position, reading the remainder of the signal.

Preferably, the step of automatically reading the binary encoded signal comprises identifying from a position in the binary encoded signal, the type of data encoded therein.

In a preferred embodiment, the binary data is presented in a 2-dimensional form on the respective video frames.

In a preferred embodiment, a checksum bit is included in the binary encoded signal to enable verification of the code at the receiver. This provides a simple and reliable means to ensure that the data as detected from the encoded frame is correct. If the checksum indicates that an error has been made in the reading then the reading can, for example, be repeated or the test can simply be ignored or taken as a correct indication of failure of operation of the device.

According to a second aspect of the present invention, there is provided apparatus for automatically testing Digital Video Broadcast receivers, the apparatus comprising:
a test image source arranged to generate a digital video test signal comprising plural image frames;
a binary code generator for generating a 2-dimensional binary code for combining with one or more of the image frames wherein the binary code is indicative of a parameter of the respective frame in which the binary encoded signal is repeated at plural positions on its respective frame;
and a transmitter, to transmit the signal to one or more receivers for detection.

In this aspect, apparatus is provided that enables simple and reliable automatic testing of DVB receivers. This is particularly useful in the case where testing is performed during manufacture and say, hundreds, thousands or even tens of thousand of similar devices are being tested in real-time during manufacture.

According to a fourth aspect of the present invention, there is provided a method of generating a Digital Video Broadcast automatic test signal, the method comprising:
generating plural image frames;
on one or more frames providing a 2-dimensional binary encoded signal indicative of a parameter of the respective frame the 2-Dimensional binary encoded signal being provided at plural positions on each frame;
combining the frames into a sequence for transmission as the Digital Video Broadcast automatic test signal

According to a fifth aspect of the present invention, there is provided a Digital Video Broadcast test assembly, comprising: apparatus for automatically testing Digital Video Broadcast receivers according to the second aspect of the present invention; and plural Digital Video Broadcast receivers according to the third aspect of the present invention.

Examples of the present invention will now be described in detail with reference to the accompanying drawings, in which:
Figure 1 is a schematic representation of a 2-dimensional representation of binary data at values 1 and 0;
Figure 2 is a schematic representation of 2-dimensional binary data inserted on a test image;
Figure 3 is a schematic representation of a 2-dimensional representation of binary data sequence;
Figure 4 shows a sequence of images each with a representation of a binary data sequence;
Figure 5 is a flow chart showing the steps of the present method;
Figure 6 is schematic representation of a test assembly for DVB receivers; and,
Figure 7 shows a simplified schematic representation of a test signal generator.

The present method provides a way by which DVB display products or receivers can be tested automatically. The method enables accurate, reliable and fast testing without human intervention. The method and apparatus enables black-box DVB display product testing in which both time-invariant and time-variant information in the video can be tested. The method of automated testing involves steps both at a transmitter and at a receiver.

Basically, at a transmitter, a binary encoded data sequence or signal is generated, to be described in detail below. The test signal generator inserts the generated data sequence onto a frame within a sequence of test images. Alternatively, in one example a pre-authored test

Examples of the present invention will now be described in detail with reference to the accompanying drawings, in which:

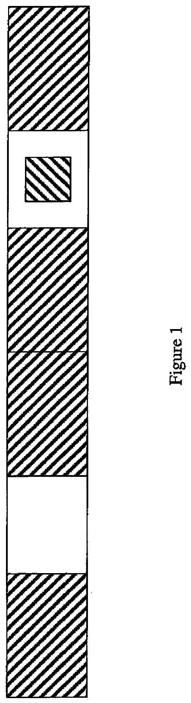

Figure 1 is a schematic representation of a 2-dimensional representation of binary data at values 1 and 0;

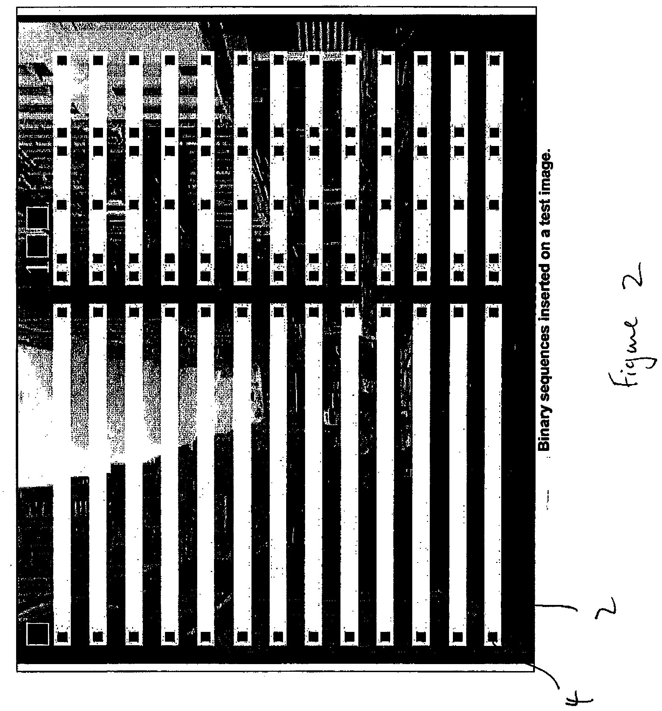

Figure 2 is a schematic representation of 2-dimensional binary data inserted on a test image;

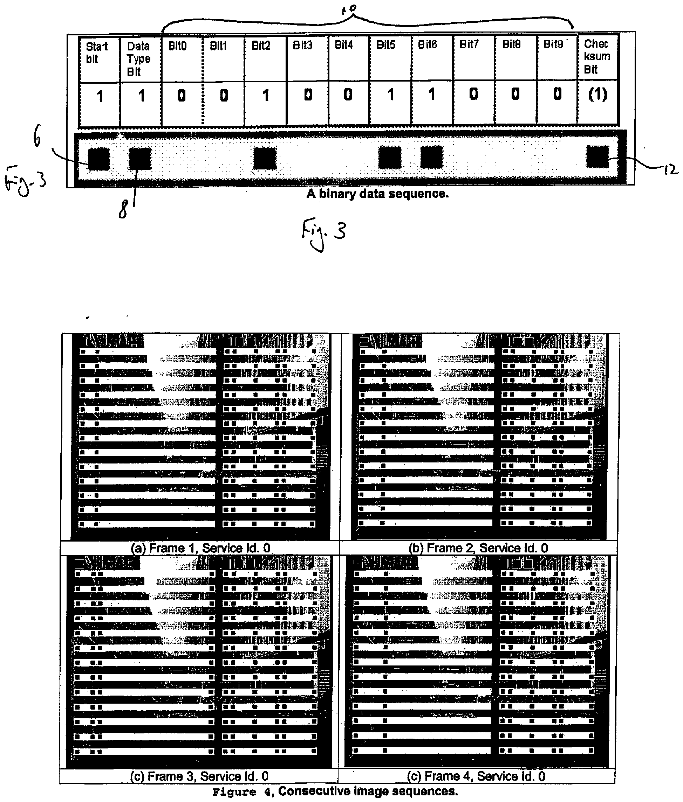

Figure 3 is a schematic representation of a 2-dimensional representation of binary data sequence;
Figure 4 shows a sequence of images each with a representation of a binary data sequence;

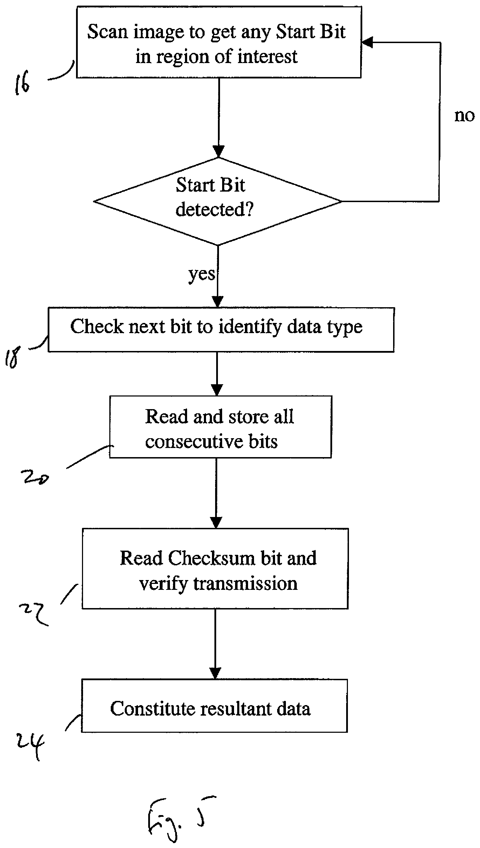

Figure 5 is a flow chart showing the steps of the present method;

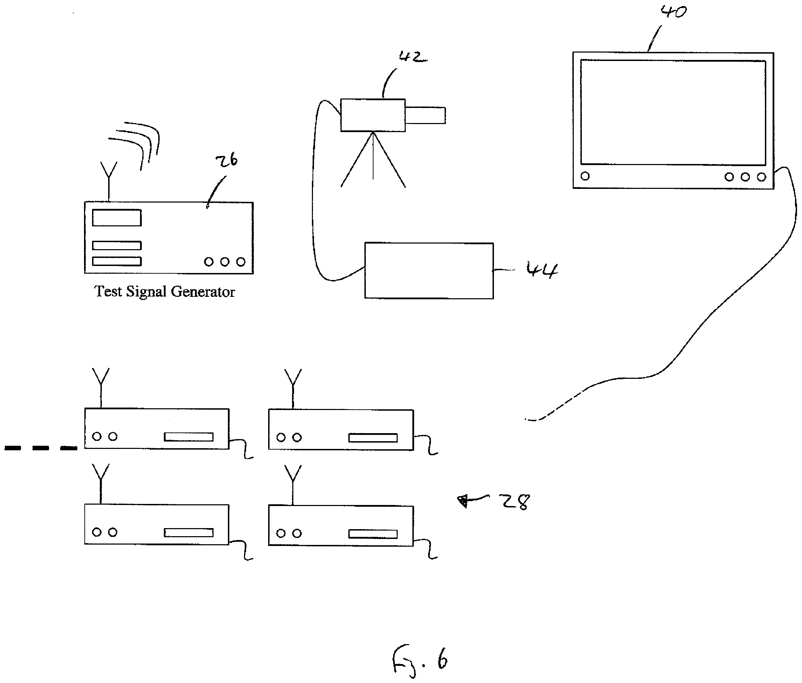

Figure 6 is schematic representation of a test assembly for DVB receivers; and,

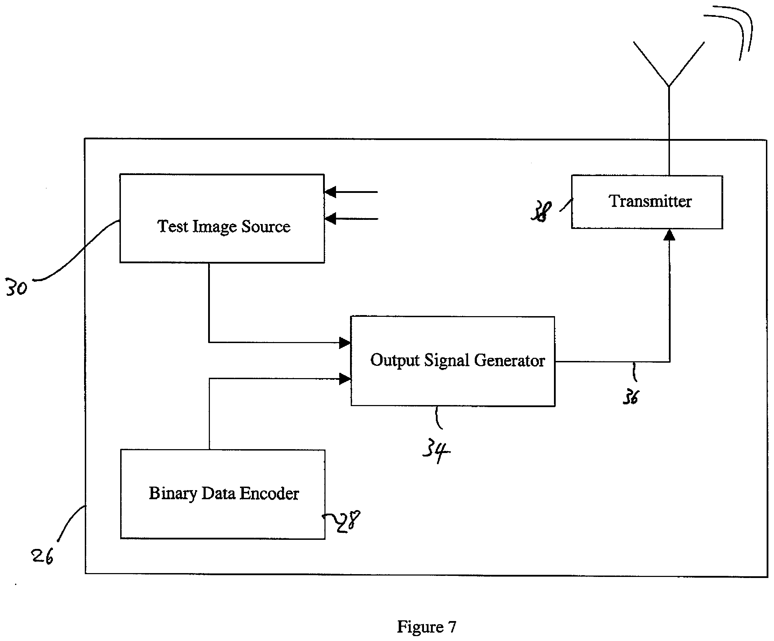

Figure 7 shows a simplified schematic representation of a test signal generator.

The present method provides a way by which DVB display products or receivers can be tested automatically. The method enables accurate, reliable and fast testing without human intervention. The method and apparatus enables black-box DVB display product testing in which both time-invariant and time-variant information in the video can be tested. The method of automated testing involves steps both at a transmitter and at a receiver.

Basically, at a transmitter, a binary encoded data sequence or signal is generated, to be described in detail below. The test signal generator inserts the generated data sequence onto a frame within a sequence of test images. Alternatively, in one example a pre-authored test stream can be utilised in which the binary data is already provided on frames of the signal. The process is repeated until all frames within the test sequence of images have been generated. The sequence of images is then transmitted as a test video stream to one or more DVB display products to be tested. At the receiver or DVB display product to be tested, the receiver detects the transmitted information and captures images from the stream. The receiving output is then captured and processed as will be described in greater detail below. Recognition of the binary data sequences may be performed and values related to them may be determined. The values thus obtained can be used for many purposes including testing and others too.

Advantageously, the method as a whole is independent of original video content. In other words it is immaterial, at least for the purpose of testing, what the images underlying the 2-dimensional binary data actually are. In addition, no user intervention is required during the test procedure and so the complexity of use of the testing system for a user is significantly reduced as compared to systems in which user intervention is required. This is extremely important particularly for automated systems such as those that might be used in the testing during manufacture of DVB display products. Furthermore, the method can easily be integrated into existing test systems and it is fast and accurate.

Thus, the basic method involves the insertion of 2-dimensional binary data sequences onto a still image and recognition of this data in another phase. Figure 1 is a schematic representation of a representation of binary data at values 1 and 0. The data is a 2-dimensional sequence, in that clearly the data is represented by 2 dimensional shapes (squares, rectangles etc), but it is represented by a 1-dimensional horizontal array. The white filled frame represents bit value "0" while the frame filled with diagonal stripes represents bit value "1". Such a presentation of binary data enables easy automatic recognition during testing as explained in detail below.

Figure 2 is a schematic representation of 2-dimensional binary data inserted on a test image 2 which forms one frame from a DVB test signal to be described in greater detail below. The image may be any test or stock image, i.e. a standard image used for testing. Data is encoded and presented as a 2-dimensional array of indicators 4 on the image 2. The data is presented in such a way that it is easily detectable and readable by an automatic reader. In the example shown, two types of binary data are displayed at the same time. In the left hand column, the frame number is presented. In the right hand column, a Service ID indicator is displayed. To help a user so that if desired manual intervention can be used, as well as the binary representation of the data a numerical indicator is also given. As shown, at the top of the left hand column a numerical indicator can easily be read by a human (black square can be read as representing zero, i.e. frame 0), and at the top of the right hand column the number 100 is shown as the Service ID.

The use of such a binary data sequence makes the system extremely adaptable and convenient to use. In particular, the length of the binary data sequence can be adapted with respect to the type of data being transmitted.

The binary data, in the 2-dimensional strips in each column, is repeated in the plural lines of the display so as to increase the efficiency of the communication method. In one example, an on screen display (OSD) may hide some of the lines. The repetition and use of a 2 dimensional array increases the chance of detection by the receiver.

With reference now to Figure 3, a description of the data format will be provided. Figure 3 is a schematic representation of a 2-dimensional sequence of binary data as used in a method of testing a DVB display product. The data is a binary data sequence consisting of plural bits at values 1 or 0. In the example shown in Figure 3, the first bit is a Start bit. This is preferably used to provide a locator for the reader. Once the reader has located the start bit it is then able to use its knowledge of the position of the start bit to read the remaining bits in the sequence.

The data sequence shown in Figure 3 is as might be used to represent Service ID data. The Start bit 6 is set at 1 and used to position the sequence in the 2-dimensional image. The next bit 8 in the sequence is the Data Type bit which is used to indicate the type of data encoded in the sequence. In the example shown if the value of the Data number is performed on the left hand side of the captured image and for the Service Id on the right hand side of the captured image.

To detect the Start bit any suitable searching method might be used. It is preferred that the location of the Start bit is identified using a Mean Squared Error (MSE) algorithm or any other such algorithm. In some cases, there is no need to include a dedicated Start bit. The Data Type bit can be used as the means to locate the data sequence within the image and so the term Start bit can be broadly understood to mean the first bit in the data sequence.

The mean squared error (MSE) of an estimator is one of many ways to quantify the amount by which an estimator differs from the true value of the quantity being estimated. MSE measures the average of the square of the "error", the error being the amount by which the estimator differs from the quantity to be estimated. In the present application, the algorithm calculates the MSE by comparing the input bitmap and the 2-dimensional Start Bit which has value 1, as shown in, e.g., figure 2.

If the minimum value of MSE values around some small neighbourhood is smaller than a predefined experimental threshold, the algorithm decides that there is a start of the binary sequence there. Subsequent binary parsing operations can then be performed according to the identification and position of the Start Bit. If the algorithm cannot calculate the minimum MSE value as desired in any of the predefined positions in 2-dimensional space, no Start bit is detected, this means that an error has occurred or possibly that no data transmission has in fact taken place.

In the example shown as there are two data types on each frame, both frame number and Service ID, the step of Start bit search is performed separately for each data sequence type. As an example, Start bit search for frame number is performed on the left hand side of the captured image and for the Service Id on the right hand side of the captured image.

To detect the Start bit any suitable searching method might be used. It is preferred that the location of the Start bit is identified using a Mean Squared Error (MSE) algorithm or any other such algorithm that. In some cases, there is no need to include a dedicated Start bit. The Data Type bit can be used as the means to locate the data sequence within the image and so the term Start bit can be broadly understood to mean the first bit in the data sequence.

The mean squared error (MSE) of an estimator is one of many ways to quantify the amount by which an estimator differs from the true value of the quantity being estimated. MSE measures the average of the square of the "error", the error being the amount by which the estimator differs from the quantity to be estimated. In the present application, the algorithm calculates the MSE by comparing the input bitmap and the 2-dimensional Start Bit which has value 1, as shown in, e.g., figure 2.

If the minimum value of MSE values around some small neighbourhood is smaller than a predefined experimental threshold, the algorithm decides that there is a start of the binary sequence there. Subsequent binary parsing operations can then be performed according to the identification and position of the Start Bit. If the algorithm cannot calculate the minimum MSE value as desired in any of the predefined positions in 2-dimensional space, it is decided that there was no test signal transmitted or that there is a possible failure in the system.

Figure 5 is a flow chart showing the steps of the present method. At step 16, the image is scanned to identify a Start bit in the region of interest. Once a Start bit is found, at step 18 a check is made to identify the data type being read. As explained above, the system can be arranged such that the type of data encoded in the sequence is identified by the Data Type bit. For example, if the Data Type bit is set to the value 1, the data type is a frame number whereas if it is set to 0, the data type is the Service Id or vice versa. If more options are required, because more than two types of data are included, then there can be a corresponding number of Data Type bits. For example, two Data Type bits would enable four different data types to be separately identifiable.

Next, at step 20, the remaining bits in the sequence are read. At step 22, the checksum is read to confirm the integrity of the read data. Last, the resultant data is constituted so that the test can be completed. It can be seen that by the use of a 2-dimensional sequence of binary encoded data, such as a 2-dimensional array, a simple and robust automatic method of testing of DVB display products can be provided. This has significant advantages in manufacturing environments where quick and reliable methods of product testing are particular beneficial.

As explained above, in a testing assembly where many hundreds or thousands of DVB display products are being tested, a relatively small reduction in test time or improvement in efficiency or accuracy can have a significant effect on the overall testing.

Figure 6 is a schematic representation of a DVD display product test assembly. The test assembly may be part of a production line of the DVD display products. The assembly includes a test signal generator 26 and plural DVB display products 28 being tested. In the present case the DVB test products are Set Top Boxes (STBs) such as might be used by an end user as a digital television receiver. The signal generator serves to generate the test signal that is transmitted to the DVB display products 28 being tested. The DVB display products 28 are arranged to receive the test signal and process it to provide an output. The output is provided from each of the display products 28 being tested to a display unit such as a television display 40.

A capture device 42 is provided arranged to view the screen of the television 40 and provide the captured images to a processor 44. The processor 44 is arranged to execute the method described above. In other words, it is arranged to detect the position of bits within the displayed 2-dimensional sequence and from the displayed image to determine whether or not the display product 28 is functioning correctly.

In another example, instead of providing a television with a separate capture and processing device a dedicated test kit (not shown) may be provided to receive the output from the display products 28. It will be appreciated that the testing can thus be performed with minimal if any human intervention whilst ensuring accuracy and reliability in the results.

Figure 7 shows a simplified schematic representation of a test signal generator 26 as shown in Figure 6. The test signal generator 26 comprises a test image source 30 which might be a memory containing a fixed set of images or it might be an input from which images or vide data can be obtained. A binary data encoder 32 is provided which serves to generate binary data for incorporation with images from the image source. An output signal generator 34 is provided. The output signal generator 34 is arranged to receive images from the test image source and combine the images with the binary data received from the binary data encoder 32 to generate an output stream 36 of video data. Alternatively, the output equipment could be arranged to play out a pre-authored video sequence. The output stream 36 includes a sequence of frames such as that shown in Figure 4a to 4c described in detail above.

Last, a transmitter 38 is provided to receive the output video stream 36 from the output signal generator 34 and transmit the video in a manner that can be received by plural DVB display products to be tested. The transmission can be done by wireless broadcast or it can be done in any other suitable manner, e.g. wired.

In one embodiment, computer software is provided which when loaded onto a computer or a chip enables the computer or chip to execute aspects of the method described herein. For example, preferably, the DVB display product includes a processor or memory that contains code that enables the DVB display product to perform the necessary steps to be tested.

Embodiments of the present invention have been described with particular reference to the examples illustrated. However, it will be appreciated that variations and modifications may be made to the examples described within the scope of the present invention.

## Claims

1. A method of automatically testing Digital Video Broadcast receivers, the method comprising:
generating a test signal comprising plural image frames;
on one or more frames providing a 2-dimensional binary encoded signal indicative of a parameter of the respective frame;
transmitting the signal to a receiver; and
automatically reading the binary encoded signal from the receiver and determining therefrom a parameter of the respective frame **characterized in that** the binary encoded signal is repeated at plural positions on its respective frame.

2. A method according to claim 1, in which the parameter of the frame is a time invariant parameter.

3. A method according to claim 2, in which the step of automatically reading the binary encoded signal comprises identifying the position of the start of the signal and from the identified start position, reading the remainder of the signal.

4. A method according to any of claims 1 to 3, in which the step of automatically reading the binary encoded signal comprises identifying from a position in the binary encoded signal, the type of data encoded therein.

5. A method according to any of claims 1 to 4, wherein the binary data is presented as a 2-dimensional array of data on the respective video frames.

6. A method according to any of claims 1 to 5, in which a Checksum bit is included in the binary encoded signal to enable automatic verification of the binary encoded signal at the receiver.

7. A method according to claim 1, in which the step of automatically reading the binary encoded signal uses one or more of image processing, structural matching or pattern recognition.

8. A method according to claim 1, comprising:
scanning an image to identify a start bit within a region of interest;
checking the next bit to identify data type;
reading and storing all bits within the signal;
reading a Checksum bit to verify transmission; and
constituting resultant data.

9. Apparatus for automatically testing Digital Video Broadcast receivers, the apparatus comprising:
a test image source arranged to generate a digital video test signal comprising plural image frames;
a binary code generator for generating a 2-dimensional binary code for combining with one or more of the image frames wherein the binary code is indicative of a parameter of the respective frame; and
a transmitter, to transmit the signal to one or more receivers for detection;
**characterized in that** the binary encoded signal is repeated at plural positions on its respective frame.

10. A method of generating a Digital Video Broadcast automatic test signal, the method comprising:
generating plural image frames;
on one or more frames providing a 2-dimensional binary encoded signal indicative of a parameter of the respective frame; combining the frames into a sequence for transmission as the Digital Video Broadcast automatic test signal;
**characterized in that** the 2-dimensional binary encoded signal is repeated at plural positions on its respective frame.

11. A Digital Video Broadcast test assembly, comprising:
apparatus for automatically testing Digital Video Broadcast receivers according to claim 9; and
image capture means arranged automatically to read the 2-dimensional binary encoded signal to enable determination therefrom a parameter of the respective frame.

## Patentansprüche

1. Verfahren zum automatischen Testen von Digital Video Broadcast-Empfängern, wobei das Verfahren folgendes umfasst:
Erzeugen eines Testsignals, das mehrere Bilder umfasst;
Bereitstellen eines zweidimensionalen, binär codierten Signals, das einen Parameter eines entsprechenden Bilds anzeigt an einem oder mehreren Bildern;
Übermitteln des Signals an einen Empfänger; und
automatisches Lesen des binär codierten Signals aus dem Empfänger und Bestimmen eines Parameters des entsprechenden Bilds daraus, **dadurch gekennzeichnet, dass**
das binär codierte Signal an mehreren Stellen an dessen entsprechenden Bild wiederholt wird.

2. Verfahren nach Anspruch 1, wobei der Parameter des Bilds ein zeitinvarianter Parameter ist.

3. Verfahren nach Anspruch 2, wobei der Schritt des automatischen Lesens des binär codierten Signals das Identifizieren der Stelle des Anfangs des Signals umfasst und das Lesen des restlichen Signals von der identifizierten Anfangsposition.

4. Verfahren nach einem der Ansprüche 1 bis 3, wobei der Schritt des automatischen Lesens des binär codierten Signals das Identifizieren des darin codierten Datentyps aus einer Stelle in dem binär codierten Signal umfasst.

5. Verfahren nach einem der Ansprüche 1 bis 4, wobei die binären Daten als eine zweidimensionale Anordnung von Daten an den entsprechenden Videobildern dargestellt sind.

6. Verfahren nach einem der Ansprüche 1 bis 5, wobei ein Prüfsummen-Bit in dem binär codierten Signal enthalten ist, um die automatische Verifizierung des binär codierten Signals an dem Empfänger zu ermöglichen.

7. Verfahren nach Anspruch 1, wobei der Schritt des automatischen Lesens des binär codierten Signals eines oder mehrere der folgenden verwendet: Bildverarbeitung, Structural Matching oder Bildmustererkennung.

8. Verfahren nach Anspruch 1, umfassend:
Abtasten eines Bilds, um ein Start-Bit in einem relevanten Bereich zu identifizieren;
Prüfen des nächsten Bits zur Identifikation des Datentyps;
Lesen und Speichern aller Bits in dem Signal;
Lesen des Prüfsummen-Bits zur Verifizierung der Übermittlung; und
Bilden der resultierenden Daten.

9. Vorrichtung zum automatischen Testen von Digital Video Broadcast-Empfängern, wobei die Vorrichtung folgendes umfasst:
eine Testbildquelle, die so angeordnet ist, dass sie ein digitales Videotestsignal erzeugt, das mehrere Bilder umfasst;
einen Binärcodegenerator zum Erzeugen eines zweidimensionalen binären Codes zur Kombination mit einem oder mehreren der Bilder, wobei der binäre Code einen Parameter des entsprechenden Bilds anzeigt; und
einen Sender zur Übermittlung des Signals zur Erkennung an einen oder mehrere Empfänger;
**dadurch gekennzeichnet, dass** das binär codierte Signal an mehreren Stellen an dessen entsprechenden Bild wiederholt wird.

10. Verfahren zum Erzeugen eines automatischen Digital Video Broadcast-Testsignals, wobei das Verfahren folgendes umfasst:
Erzeugen mehrerer Bilder;
Bereitstellen eines zweidimensionalen, binär codierten Signals, das einen Parameter eines entsprechenden Bilds anzeigt an einem oder mehreren Bildern;
Kombinieren der Bilder in eine Sequenz zur Übermittlung als das automatische Digital Video Broadcast-Testsignal;
**dadurch gekennzeichnet, dass** das zweidimensionale, binär codierte Signal an mehreren Stellen an dessen entsprechenden Bild wiederholt wird.

11. Digital Video Broadcast-Testanordnung, umfassend:
eine Vorrichtung zum automatischen Testen von Digital Video Broadcast-Empfängern nach Anspruch 9; und
Bilderfassungsmittel, die so angeordnet sind, dass sie das zweidimensionale, binär codierte Signal lesen, um daraus die Bestimmung eines Parameters des entsprechenden Bilds zu ermöglichen.

## Revendications

1. Procédé pour tester automatiquement des récepteurs de diffusion vidéo numérique, le procédé comprenant les étapes consistant à :
générer un signal d'essai comprenant plusieurs trames d'image ;
sur au moins une trame fournir un signal codé binaire bidimensionnel indiquant un paramètre de la trame respective ;
transmettre le signal à un récepteur ; et
lire automatiquement le signal codé binaire provenant du récepteur et déterminer à partir de celui-ci un paramètre de la trame respective ;
**caractérisé en ce que** le signal codé binaire est répété à plusieurs positions sur sa trame respective.

2. Procédé selon la revendication 1, le paramètre de la trame étant un paramètre invariable dans le temps.

3. Procédé selon la revendication 2, la lecture automatique du signal codé binaire comprenant les étapes consistant à identifier la position du début du signal et, à partir de la position de début identifiée, à lire le reste du signal.

4. Procédé selon l'une quelconque des revendications 1 à 3, la lecture automatique du signal codé binaire comprenant l'étape consistant à identifier à partir d'une position dans le signal codé binaire, le type de données qui y sont codées.

5. Procédé selon l'une quelconque des revendications 1 à 4, les données binaires étant présentées comme une matrice bidimensionnelle de données sur les trames vidéo respectives.

6. Procédé selon l'une quelconque des revendications 1 à 5, un bit de somme de contrôle étant inclus dans le signal codé binaire pour permettre la vérification automatique du signal codé binaire au niveau du récepteur.

7. Procédé selon la revendication 1, la lecture automatique du signal codé binaire utilisant un traitement d'image, une mise en correspondance structurelle et/ou une reconnaissance de motifs.

8. Procédé selon la revendication 1, comprenant les étapes consistant à :
balayer une image pour identifier un bit de début dans une région d'intérét ;
vérifier le bit suivant pour identifier le type de données ;
lire et stocker tous les bits dans le signal ;
lire un bit de somme de contrôle pour vérifier la transmission ; et
constituer les données ainsi obtenues.

9. Appareil pour tester automatiquement des récepteurs de diffusion vidéo numérique, l'appareil comprenant :
une source d'image d'essai conçue pour générer un signal d'essai vidéo numérique comprenant plusieurs trames d'image ;
un générateur de code binaire pour générer un code binaire bidimensionnel à combiner à au moins une trame d'image, le code binaire indiquant un paramètre de la trame respective ; et
un émetteur, pour transmettre le signal à au moins un récepteur pour la détection ;
**caractérisé en ce que** le signal codé binaire est répété à plusieurs positions sur sa trame respective.

10. Procédé pour générer un signal d'essai automatique de diffusion vidéo numérique, le procédé comprenant les étapes consistant à :
générer plusieurs trames d'image ;
sur au moins une trame fournir un signal codé binaire bidimensionnel indiquant un paramètre de la trame respective ;
combiner les trames en une séquence à des fins de transmission en tant que signal d'essai automatique de diffusion vidéo numérique ;
**caractérisé en ce que** le signal codé binaire bidimensionnel est répété à plusieurs positions sur sa trame respective.

11. Ensemble d'essai de diffusion vidéo numérique, comprenant :
un appareil pour tester automatiquement des récepteurs de diffusion vidéo numérique selon la revendication 9 ; et
un moyen de capture d'image disposé pour lire automatiquement le signal codé binaire bidimensionnel pour permettre la détermination à partir de celui-ci d'un paramètre de la trame respective.
